# EUROPÄISCHE PATENTSCHRIFT

(11) **EP 2 414 470 B1**
(45) Veröffentlichungstag und Bekanntmachung des Hinweises auf die Patenterteilung: **31.07.2013**
(21) Anmeldenummer: 10712065.1
(22) Anmeldetag: 30.03.2010
(51) Int. Cl.: C09J 5/00, C09J 103/18, C09J 175/04, C09J 11/06

(54) **TRANSPARENTE KLEBEMASSE FÜR EINEN KLEBESTIFT**
TRANSPARENT ADHESIVE MASS FOR A GLUE STICK
MATIÈRE ADHÉSIVE TRANSPARENTE POUR BÂTON DE COLLE

(30) Priorität: 31.03.2009 DE 102009002022
(43) Veröffentlichungstag der Anmeldung: 08.02.2012
(73) Patentinhaber: Henkel AG & Co. KGaA, 40589 Düsseldorf (DE)
(72) Erfinder: HRZIBEK, Martin, 42781 Haan (DE); RUSTEMEYER, Felix, 41470 Neuss (DE)
(86) Internationale Anmeldenummer: PCT/EP2010/054241
(87) Internationale Veröffentlichungsnummer: WO 2010/112525

(56) Entgegenhaltungen:
- WO-A1-2009/154846
- US-A1- 2007 149 669

## Beschreibung

Die vorliegende Erfindung betrifft eine formstabile Klebemasse für einen Klebestift, die wenigstens ein Polymer, ein Tensid, einen Zucker und Wasser enthält.

Gattungsgemäße Klebestifte bzw. Klebemassen sind aus dem Stand der Technik bekannt. So beschreibt die WO 99/48989 eine Klebemasse zur Herstellung von Klebestiften auf Basis einer wässrigen Polyurethandispersion, die Tenside sowie auch Zucker beinhalten kann. Die hier beschriebenen Klebemassen sind üblicherweise weiss-milchig und können in der Ausformung als Klebestift bei unsachgemäßer Anwendung beim Verkleben von Papier kleine Bröckchen von Klebemasse auf dem Papier hinterlassen.

Die WO 99/51699 beschreibt einen Klebestift auf Basis eines Stärkeethers, wobei der Klebestift des Weiteren noch Wasser, ein Seifengel als formgebende Gerüstsubstanz sowie Saccharose enthält. Auch diese Klebestifte sind milchig-weiss und können bei dem oben beschriebenen unsachgemäßen Gebrauch beispielsweise beim Verkleben von Papier auf diesem kleinere Brocken der Klebemassen hinterlassen.

Diese aus dem Stand der Technik bekannte Klebemasse für Klebestifte zeichnet sich demnach durch eine gewisse Eigenfärbung aus, wodurch sie weniger gut für die Verklebung transparenter Bauteile geeignet sind.

Die US 2007/149669 A1 betrifft eine formstabile Klebemasse für einen Klebestift enthaltend Polypyrrolidon von 5 bis weniger als 40%, eine Mischung aus Salzen von Fettsäuren als Tensid von 3 bis weniger als 20%, einen Zucker von 20 bis weniger als 50%, Wasser von 15 bis weniger als 60%, mehrere mehrwertige Alkohole von 0,5 bis weniger als 30% bezogen auf das Gesamtgewicht der Klebemasse. Diese Klebemassen erreichen eine Formstabilität und stellen gleichzeitig eine Transparenz sicher, ohne kleine Brocken auf der Papieroberfläche zu hinterlassen.

Es besteht nach wie vor der Bedarf an Klebemassen für Klebestifte, welche auch bei nicht sachgemäßem Gebrauch, beispielsweise bei zu weitem Herausdrehen des Klebestifts aus der Hülse und zu starkem Anpressdruck beim Verkleben von Papier oder ähnlichen Substraten möglichst keine Klebstoffagglomerate hinterlassen.

Die Aufgabe der vorliegenden Erfindung besteht somit darin, die aus dem Stand der Technik bekannten formstabilen Klebemassen für Klebestifte dahingehend zu verbessern, dass diese keine wesentliche Eigenfärbung aufweisen und darüber hinaus eine verbesserte Applizierbarkeit bei der Anwendung besitzen. Insbesondere soll die Klebemasse bei ausreichender Härte eine gute Verstreichbarkeit beispielsweise auf Papier ermöglichen, ohne dass es zu Klumpenbildung auf dem Papier kommt.

Diese Aufgabe wird gelöst durch eine formstabile Klebemasse für einen Klebestift, der wenigstens ein Polymer, ein Tensid, einen Zucker sowie Wasser enthält und der dadurch gekennzeichnet ist, dass das Gewichtsverhältnis der Summe von Tensid und Zucker zu Wasser wenigstens 0,7:1 beträgt und der Klebestift einen Wassergehalt von 25 bis weniger als 35 Gew.-% bezogen auf das Gesamtgewicht der Klebemasse aufweist, wobei als Tenside eine Mischung wenigstens eines Fettalkohol-Derivats und wenigstens eines Salzes einer Fettsäure oder eines Fettsäurederivats enthalten sind und das Verhältnis von Fettalkohol-Derivat zu dem Salz der Fettsäure bzw. deren Derivat von 4:1 bis 1:4 beträgt.

Der vorliegenden Erfindung liegt die Kenntnis zugrunde, dass Klebemassen für Klebestifte mit einem Wassergehalt von 25 bis weniger als 35 Gew.-% transparent oder zumindest transluszent sind, wenn die Klebemasse gleichzeitig ein Tensid und Zucker in einer solchen Menge aufweist, dass die Summe dieser beiden Bestandteile wenigstens 70 % der Wassermenge des Stifts beträgt.

Solche Klebemassen sind jedoch nicht nur transluszent oder transparent sondern zeichnen sich außerdem noch durch eine verhältnismäßig große Festigkeit aus, die jedoch überraschenderweise nahezu keinen negativen Einfluss auf die Applizierbarkeit der Klebemasse hat. Dies äußert sich insbesondere darin, dass Klebestifte auf Basis einer formstabilen Klebemasse mit der erfindungsgemäßen Zusammensetzung selbst bei weitem Herausdrehen des Klebestifts aus der Hülse und gleichzeitig hohem Anpressdruck auf dem zu bestreichenden Substrat beim Klebstoffauftrag durch seitliche Bewegung des Klebestiftes praktisch keine Ablösung von Klebstoffagglomeraten auf dem Substrat zeigt. Gleichzeitig jedoch lässt sich mit leichtem Anpressdruck das Substrat mit einer ausreichenden Menge an Klebstoff beschichten. Darüber hinaus erbringt die Verklebung von beispielsweise zwei Seiten Papier die gewünschten Ergebnisse, so dass beim Versuch des Auseinanderziehens der Verklebung nach kurzer Zeit bereits Papierriss auftritt.

Im Rahmen der vorliegenden Erfindung können bei den Klebemassen im Prinzip sämtliche Zucker eingesetzt werden. Besonders bevorzugt ist der Einsatz von Saccharose.

Eine Weiterbildung der erfindungsgemäßen Klebemasse besteht darin, dass die Klebemasse 5 bis 20 Gew.-%, bevorzugt 8 bis 18 Gew.-%, ganz besonders bevorzugt 10 bis 16 Gew.-% eines oder mehrerer Alkohole enthält, wobei mehrwertige Alkohole besonders bevorzugt sind. Zu den besonders bevorzugten mehrwertigen Alkoholen gehören beispielsweise Glycerin, Propylenglykol (1, 2-Propylenglycol) oder Mischungen von diesen. Der Einsatz von Alkoholen in der Klebemasse in den angegebenen Mengen ermöglicht eine weiche Abreibbarkeit bei der Verwendung der Klebemasse für einen Klebestift, ohne jedoch die transparenten bzw. transluszenten Eigenschaften der Klebemasse wesentlich zu beeinträchtigen. Dies ist insbesondere ausgeprägt bei der Verwendung von Glycerin und/oder 1,2-Propylenglykol.

Nach einer bevorzugten Ausführungsform der erfindungsgemäßen Klebemasse ist das in der Klebemasse eingesetzte Polymer ausgewählt aus Polyurethan, Polyacrylat, Polyvinylpyrrolidon, Stärke und deren Derivaten, insbesondere Stärkeether, sowie Mischungen der vorgenannten Polymere. Der erfindungsgemäß in der Klebemasse enthaltene Zucker wird nicht zu den in der Klebemasse einsetzbaren Polymeren gerechnet, sondern stellt einen weiteren Bestandteil der Klebemasse dar. Die vorgenannten Polymere sind besonders bevorzugt, da auf diese Weise Klebemassen für Klebestifte hergestellt werden, mit denen Papier einfach und zuverlässig verklebt werden kann. Insbesondere geeignet sind hierbei zum einen Polyurethane alleine oder in Kombination mit Polyvinylpyrrolidon und zum anderen Stärkeether. Der Einsatz dieser Polymere bzw. Polymermischungen ermöglicht die Herstellung von transparenten Klebemassen mit sehr guten Verklebungseigenschaften. Die oben genannten Polymere werden üblicherweise in Form wässriger Dispersionen eingesetzt.

Unter einem "Polyurethan" wird ein Polymer verstanden, in dessen Makromolekülen mindestens zwei Urethan-Gruppierungen -NH-CO-O- vorhanden sind, welche Wiederholungseinheiten und/oder Strukturabschnitte dieses Polymers miteinander verknüpfen. Unter einem Stärkeether wird ein Stärke-Derivat verstanden, in dem die Hydroxy-Gruppen der Glukose-Einheiten zumindest teilweise verethert sind. "Teilweise" bedeutet dabei, dass zumindest eine OH-Gruppe des Stärkemoleküls verethert ist. Die Hydroxy-Gruppen können mit Alkyl- oder Aralkyl-Resten verethert sein, die ihrerseits weitergehende Substitution, zum Beispiel mit Carboxy-Gruppen, aufweisen.

Nach einer weiteren Ausführungsform der erfindungsgemäßen Klebemasse weist diese einen Polymergehalt von 8 bis 40 Gew.-%, bevorzugt von 10 bis 30 Gew.-%, ganz besonders bevorzugt von 12 bis 25 Gew.-% auf. Diese Mengenangaben beziehen sich auf den Polymeranteil als Feststoff bezogen auf die Gesamtmasse der Klebemasse. Solche Klebemassen zeichnen sich dadurch aus, dass sie einerseits eine ausreichende Klebkraft auf den üblichen Substraten wie beispielsweise Papier aufweisen und gleichzeitig mit Hilfe der übrigen Bestandteile der Klebemasse, insbesondere Zucker und Tensid eine ausreichende Formstabilität erreichen, so dass die aus den erfindungsgemäßen hergestellten Klebestifte über einen weiten Temperaturbereich dimensionsstabil sind.

Als weiterhin vorteilhaft hatte es sich bei den erfindungsgemäßen Klebemassen herausgestellt, wenn diese 2,5 bis 15 Gew.-% an Tensid erhält. Dieser Tensidgehalt trägt zur Formstabilität der erfindungsgemäßen Klebemasse bei und ermöglicht gleichzeitig ein gutes Abstreichverhalten der aus der erfindungsgemäßen Klebemasse hergestellten Klebestifte.

Gemäß einer weiteren Ausführungsform der erfindungsgemäßen Klebemasse enthält diese 15 bis 40 Gew.-% Zucker, bevorzugt 18 bis 35 Gew.-%. Diese Mengen an Zucker sind besonders bevorzugt, da die erfindungsgemäße Klebemasse eine größere Festigkeit und damit Formstabilität erreicht und gleichzeitig deren Transparenz bzw. Transluszenz sichergestellt wird.

Gemäß einer besonders bevorzugten Ausführungsform der erfindungsgemäßen Klebemasse ist diese weitestgehend transparent oder transluszent. Unter einer transluszenten Klebemasse wird im Sinne der vorliegenden Erfindung eine Klebemasse verstanden, bei der bei senkrechter Bestrahlung eines Würfels der formstabilen Klebemasse mit einer Kantenlänge von 2 cm mit einem Laserstrahl von einem Durchmesser von 2 mm, einer Leistung vom 1 mW und einer Wellenlänge vom 632 nm auf der gegenüberliegenden Seite der bestrahlten Würfelfläche der Lichtpunkt mit dem menschlichen Auge noch als solcher erkennbar ist. Hierbei kann aufgrund von Beugungs- bzw. Streuungseffekten eine leichte Vergrößerung oder Verzerrung des Lichtpunktes auftreten. Transparente Klebemassen zeigen zum Unterschied zu transluszenten Klebemassen bei diesem Test praktisch keine Vergrößerung oder Verzerrung des Lichtpunktes.

Erfindungsgemäße Klebemassen zeichnen sich dadurch aus, dass das Tensid eine Mischung wenigstens eines Fettalkohol-Derivats und wenigstens eines Salzes einer Fettsäure oder eines Fettsäurederivats umfasst, wobei das Verhältnis von Fettalkohol-Derivat zu dem Salz der Fettsäure bzw. deren Derivat von 4 : 1 bis 1 : 4 beträgt. Hierzu können beispielsweise C₁₂ bis C₁₈ - Fettalkoholderivate und C₁₂ bis C₁₈ -Fettsäuresalze bzw. deren Derivate eingesetzt werden. Als für die erfindungsgemäßen Klebemassen besonders geeignete Tenside haben sich C₁₂ bis C₁₄- Alkoholderivate und C₁₂ bis C₁₄ - Fettsäuresalze oder deren Derivate herausgestellt. Diese sind besonders geeignet, da die kürzerkettigen Fettalkoholderivate bzw. Salze der entsprechenden Fettsäuren zu einer besseren Transluszenz bzw. Transparenz der erhaltenen Klebemasse führen. Als Fettsäuresalze können beispielsweise Alkalimetallsalze eingesetzt werden, insbesondere die Natriumsalze der Fettsäuren bzw. Fettsäurederivate. Erfindungsgemäß einsetzbare Alkoholderivate sind beispielsweise Fettalkoholsulfate bzw. deren Salze oder ethoxylierte Fettalkoholsulfate bzw. deren Salze, beispielsweise Fettalkohol-Natriumsulfat und Fettalkohol-Ethoxy-Natriumsulfat.

Gemäß einer bevorzugten Ausführungsform der erfindungsgemäßen Klebemasse weist diese einen Gehalt von höchstens 15 Gew.-% an Fettalkoholderivaten und Fettsäuresalzen und deren Derivaten mit einer Kettenlänge von C₁₆ oder länger auf, bevorzugt von höchstens 3 Gew.-%. Ganz besonders bevorzugte erfindungsgemäße Klebemassen sind weitestgehend frei von Fettalkoholderivaten und Fettsäuresalzen und deren Derivaten mit einer Kettenlänge von C₁₆ oder länger. Diese Klebemassen sind besonders bevorzugt, da ein hoher Gehalt an diesen langkettigen Fettsäuren bzw. Fettalkoholderivaten die Transparenz bzw. Transluszenz der erfindungsgemäßen Klebemassen in negativer Weise beeinflussen kann.

Gemäß einer besonders bevorzugten Ausführungsform der erfindungsgemäßen Klebemasse ist das Verhältnis von Fettalkoholderivat zu dem Salz der Fettsäure bzw. deren Derivat von 3:1 bis 1:3, besonders bevorzugt von 2:1 bis 1:2. Derartige Tensidmischungen erfindungsgemäßer Klebemassen führen zu einer ausreichenden Härte der Klebemasse und ermöglichen dabei dennoch eine gute Vestreichbarkeit der Klebemasse beispielsweise auf Papier ohne dass es zu Klumpenbildung auf dem Papier kommt.

Gemäß einer Weiterbildung der erfindungsgemäßen Klebemasse enthält diese weitere Hilfsstoffe wie Weichmacher, Pigmente, Farbstoffe, Duftstoffe, Konservierungsmittel und/oder feuchtigkeitsregulierende Stoffe sowie gewünschtenfalls weitere wasserlösliche und/oder wasserdispergierbare Polymere.

Ein weiterer Gegenstand der vorliegenden Erfindung betrifft einen Klebestift der eine erfindungsgemäße Klebemasse enthält. Klebestifte weisen in an sich bekannter Weise neben einer Klebemasse in der Regel eine zylindrische Hülse auf, in der sich die formstabile Klebemasse befindet und mittels eines Spindelvortriebs aus dieser Hülse heraus und wieder hinein gefahren werden kann. Üblicherweise wird die Öffnung aus der die ebenfalls zylindrisch geformte Klebemasse heraus und hinein gefahren werden kann über eine abnehmbare zylindrische Abdeckkappe verschlossen.

Ein weiterer Gegenstand der vorliegenden Erfindung ist die Verwendung der erfindungsgemäßen Klebemasse zum flächigen Verbinden von Substraten, insbesondere von Papier wie beispielsweise Fotopapier, Pappe, Glas und/oder Kunststoff, insbesondere von transparenten Kunststoffteilen. Die Verklebungen können dabei an jeweils gleichen aber auch unterschiedlichen Substraten untereinander vorgenommen werden.

Die vorliegende Erfindung wird im Folgenden anhand von Beispielen näher erörtert:
In Tabelle 1 sind die Zusammensetzungen der erfindungsgemäßen Klebemassen dargestellt:

**(Tabelle 1)**

| | Beispiel 1 | Beispiel 2 |
|---|---|---|
| Polyurethandispersion | 40 | 43 |
| 1,2-Propylenglykol | 5,2 | |
| Glycerin | --- | 5,2 |
| Entschäumer | 0,1 | 0,1 |
| Seife | 22 | 22 |
| Tetradecansäure | 3 | 3 |
| 20 %ige Natronlauge | 2,7 | 2,7 |
| Polyvinylpyrrolidon | 4 | 4 |
| Saccharose | 23 | 20 |

Die jeweils eingesetzte wässrige Polyurethandispersion weist einen Polymeranteil von 35,8 Gew.-% sowie 63,7 Gew.-% Wasser auf. Der Rest sind Hilfsstoffe wie beispielsweise Entschäumer.

Die in den Beispielen eingesetzte Seife umfasst eine Tensidmischung von Natriumstearat, Natriumlaurat und Natriumlaurysulfat und weiteren Komponenten der folgenden Zusammensetzung:

| Komponente | Gewichtsteile |
|---|---|
| Wasser | 22,2 |
| Glycerin | 21 |
| Natriumstearat | 7,9 |
| 1,2-Propylenglykol | 15 |
| Sorbitol | 8,8 |
| Natriumlaurat | 7,7 |
| Natriumlaurethsulfat | 5,8 |
| Natriumlaurysulfat | 1,2 |

**(Tabelle 2)**

| | |
|---|---|
| Natriumchlorid | 1,1 |

Die Klebemassen werden nach der folgenden allgemeinen Vorschrift hergestellt: Zunächst wird die wässrige Polyurethandispersion in einem Behälter mit Rückflusskühler vorgelegt und mit dem 1,2-Propylenglykol bzw. Glycerin und dem Entschäumer (Dehydran 975) gemischt. Anschließend wird die Mischung langsam auf 80 °C erhitzt und während der Aufheizphase das Polyvinylpyrrolidon hinzugegeben. Dann werden die Tetradecansäure (Edenor C 14 98 - 100) und die Natronlauge hinzu gegeben. Schließlich wird die Seife hinzugefügt und die Mischung auf 100 °C erhitzt und ca. 30 Minuten unter Rühren homogenisiert. Anschließend wird nach Abkühlen auf 80°C der Zucker unter Rühren hinzugefügt, danach in die Form zylindrischer Prüfkörper mit einer Länge von 3 cm und einem Durchmesser von 2,3 cm gebracht und für 24 Stunden bei 20 °C gelagert.

Zur Bestimmung der Anfangsklebkraft wird ein Blatt Papier mit der Klebemasse mit einem Druck von etwa 2 kg auf einen oben beschriebenen, plan auf das Papier aufgesetzten Prüfkörper aufgestrichen, das Blatt zusammengefaltet und anschließend sofort wieder auseinander gezogen und die hierfür benötigte Kraft subjektiv bestimmt. Eine hohe Anfangsklebkraft korrespondiert zu einer subjektiv hohen Zugkraft.

Bei dem Blatt Papier handelte es sich, wie auch bei den weiteren Tests, um ein Produkt des Unternehmens "Maestro" der Größe A4 mit einem Gewicht von 80 g/m² und der Papierfarbe rot (ZR09). Bei dem Beschichten dieses Papiers mit den erfindungsgemäßen Klebemassen kommt es praktisch nicht zu einer Klumpenbildung auf dem Papier, der Klebstoffauftrag ist weitestgehend homogen.
Zur Bestimmun der optischen Erscheinung wird ein Würfels der formstabilen Klebemasse mit einer Kantenlänge von 2 cm senkrecht auf eine seiner Flächen mit einem Laserstrahl von einem Durchmesser von 2 mm, einer Leistung vom 1 mW und einer Wellenlänge vom 632 nm bestrahlt und dann auf der gegenüberliegenden Seite der bestrahlten Würfelfläche der Lichtpunkt optisch begutachtet. Bei der Klebemasse gemäß Beispiel 1 ist der Lichtpunkt nahezu unverändert sichtbar (transparent), bei der Klebemasse gemäß Beispiel 2 kommt es zu einer leichten Vergrößerung des Lichtpunktes auf etwa 4 mm (transluszent).

Zur Bestimmung der Klebkraft wird das Papier wie oben beschrieben mit dem Klebstoff beschichtet und gefaltet, jedoch wird bis zum Auseinanderziehen 15 Minuten gewartet. Das Papier lässt sich bei beiden Beispielrezepturen nicht mehr auseinander ziehen sondern es kommt zum Zerreißen des Papiers.

Die Ergebnisse sind in der folgenden Tabelle 3 zusammen gefasst:

**(Tabelle 3)**

| | Beispiel 1 | Beispiel 2 |
|---|---|---|
| Anfangsklebkraft Papier 80 g/m² | Hoch | Hoch |
| Optische Erscheinung | transparent | transluszent |
| Klebkraft Papier 80 g/m² | Papierriss | Papierriss |

Ein weiteres Formulierungsbeispiel und die entsprechenden Ergebnisse enthält die nachfolgende Tabelle 4:

**(Tabelle 4)**

| Zusammensetzung | Beispiel 3 |
|---|---|
| | Gew.-% |
| Hydroxypropylstärke (41%ige wässrige Dispersion | 47 |
| 1,2-Propylenglykol | 8 |
| Neopentylglykol | - |
| Glycerin | - |
| Entmineralisiertes Wasser | 4,7 |
| Fettsäuren | 5 |
| Saccharose | 28 |
| 10%ige Natronlauge | 1,4 |
| Hilfsstoffe | 5,9 |
| | |
| Ergebnisse | |
| | |
| Optische Erscheinung | transluszent |
| Druckfestigkeit (20 g) | 131 N |
| Klebkraft (Papier, 80 g/m²) | Papierriss |

### Druckfestigkeit

Unter dem Begriff Druckfestigkeit ist die beim Zusammenbrechen der Stiftform unter Druckbelastung parallel zur Längsachse gemessene Höchstlast zu verstehen.
Zur Messung der Druckfestigkeit dient das Prüfgerät Modell 464L, Messkopf 709, der Fa. Erichsen.
Der unmittelbar oberhalb des Kolbens abgeschnittene Klebstoff mit einer Mindestlänge von 30 mm wird zwischen zwei Haltestücke eingesteckt; hierbei handelt es sich um Scheiben aus Hart-PVC, deren Dicke ca. 10 mm beträgt und die eine an den jeweiligen Stiftdurchmesser angepasste kreisrunde Vertiefung von 3 mm aufweisen. Der mit den Haltestücken versehene Stift wird zentrisch auf den Prüftisch des Druckfestigkeitstesters gestellt. Die Höhe des Kraftmessinstrumentes über dem Prüftisch wird der Höhe des Prüfteils angepasst. Dann fährt man den Messkopf mit einer Vorschubgeschwindigkeit von ca. 70 mm pro Minute gegen den zu prüfenden Stift. Nach Erreichen der größten Druckkraft wird der Wert von der digitalen Anzeige abgelesen.

## Patentansprüche

1. Formstabile Klebemasse für einen Klebestift, enthaltend wenigstens ein Polymer, ein Tensid, einen Zucker und Wasser, **dadurch gekennzeichnet, dass** das Gewichtsverhältnis der Summe von Tensid und Zucker zu Wasser wenigstens 0,7 : 1 beträgt und der Klebestift einen Wassergehalt von 25 bis weniger als 35 Gew.-% bezogen auf das Gesamtgewicht der Klebemasse aufweist, wobei als Tenside eine Mischung wenigstens eines Fettalkohol-Derivats und wenigstens eines Salzes einer Fettsäure oder eines Fettsäurederivats enthalten sind und das Verhältnis von Fettalkohol-Derivat zu dem Salz der Fettsäure bzw. deren Derivat von 4 : 1 bis 1 : 4 beträgt.

2. Klebemasse nach Anspruch 1, **dadurch gekennzeichnet, dass** die Klebemasse 5 bis 20 Gew.-% eines oder mehrerer Alkohole enthält, insbesondere mehrwertige Alkohole.

3. Klebemasse nach Anspruch 1 oder 2, **dadurch gekennzeichnet, dass** das Polymer ausgewählt ist aus Polyurethan, Polyacrylat, Polyvinylpyrrolidon, Stärke und deren Derivaten sowie Mischungen von diesen.

4. Klebemasse nach einem der vorstehenden Ansprüche, **dadurch gekennzeichnet, dass** die Klebemasse 8 bis 40 Gew.-% an Polymer enthält.

5. Klebemasse nach einem der vorstehenden Ansprüche, **dadurch gekennzeichnet, dass** die Klebemasse 2,5 bis 15 Gew.-% an Tensid enthält.

6. Klebemasse nach einem der vorstehenden Ansprüche, **dadurch gekennzeichnet, dass** die Klebemasse 15 bis 40 Gew.-% an Zucker enthält.

7. Klebemasse nach einem der vorstehenden Ansprüche, **dadurch gekennzeichnet, dass** die Klebemasse als Tensid ein C₁₂ - C₁₈ Fettalkohol-Derivat und ein C₁₂ - C₁₈ Fettsäuresalz und/oder dessen Derivat umfasst, insbesondere ein C₁₂ - C₁₄ Fettalkohol-Derivat und ein C₁₂ - C₁₄ Fettsäuresalz oder dessen Derivat.

8. Klebemasse nach Anspruch 7, **dadurch gekennzeichnet, dass** die Klebemasse einen Gehalt von höchstens 5 Gew.-% an Fettalkohol-Derivaten und Fettsäuresalzen und deren Derivaten mit einer Kettenlänge von C₁₆ oder länger aufweist, bevorzugt von höchstens 3 Gew.-%.

9. Klebemasse nach einem der vorstehenden Ansprüche, **dadurch gekennzeichnet, dass** die Klebemasse als weitere Hilfsstoffe Weichmacher, Pigmente, Farbstoffe, Duftstoffe, Konservierungsmittel und/ oder feuchtigkeitsregulierende Stoffe sowie gewünschtenfalls weitere wasserlösliche und/ oder wasserdispergierbare Polymere enthalten sind.

10. Klebestift, enthaltend eine Klebemasse nach einem der Ansprüche 1 bis 9.

11. Verwendung einer Klebemasse nach einem der Ansprüche 1 bis 9 zum flächigen Verbinden von Substraten, insbesondere von Papier, insbesondere Fotopapier, Pappe, Glas und/oder Kunststoff.

## Claims

1. A dimensionally stable adhesive compound for a glue stick, containing at least one polymer, a surfactant, a sugar, and water, **characterized in that** the weight ratio of the sum of surfactant and sugar to water is equal to at least 0.7 : 1, and the glue stick has a water content from 25 to less than 35 wt% based on the total weight of the adhesive compound, wherein the adhesive compound contains a mixture of at least one fatty alcohol derivative and at least one salt of a fatty acid or of a fatty acid derivative, the ratio of fatty alcohol derivative to the salt of the fatty acid respectively derivative thereof being equal to from 4 : 1 to 1 : 4.

2. The adhesive compound according to Claim 1, **characterized in that** the adhesive compound contains 5 to 20 wt% of one or more alcohols, in particular polyvalent alcohols.

3. The adhesive compound according to Claim 1 or 2, **characterized in that** the polymer is selected from polyurethane, polyacrylate, polyvinylpyrrolidone, starch, and derivates thereof as well as mixtures of them.

4. The adhesive compound according to one of the preceding claims, **characterized in that** the adhesive compound contains 8 to 40 wt% polymer.

5. The adhesive compound according to one of the preceding claims, **characterized in that** the adhesive compound contains 2.5 to 15 wt% surfactant.

6. The adhesive compound according to one of the preceding claims, **characterized in that** the adhesive compound contains 15 to 40 wt% sugar.

7. The adhesive compound according to one of the preceding claims, **characterized in that** the adhesive compound encompasses a C₁₂ to C₁₈ fatty alcohol derivative and/or a C₁₂ to C₁₈ fatty acid salt and/or derivative thereof, in particular a C₁₂ to C₁₄ fatty alcohol derivative and/or a C₁₂ to C₁₄ fatty acid salt or derivative thereof as a surfactant.

8. The adhesive compound according to Claim 7, **characterized in that** the adhesive compound has a content of at most 5 wt%, preferably at most 3 wt%, of fatty alcohol derivatives and/or fatty acid salts and derivatives thereof having a chain length of C₁₆ or longer.

9. The adhesive compound according to one of the preceding claims, **characterized in that** the adhesive compound contains, as further adjuvants, plasticizers, pigments, dyes, scents, preservatives, and/or moisture-regulating substances as well as, if desired, further watersoluble and/or water-dispersible polymers.

10. A glue stick containing an adhesive compound according to one of Claims 1 to 9.

11. Use of an adhesive compound according to one of Claims 1 to 9 for the planar joining of substrates, in particular of paper, in particular photographic paper, cardboard, glass, and/or plastic.

## Revendications

1. Matière adhésive résistant à la déformation pour un bâton de colle, contenant au moins un polymère, un agent tensioactif, un sucre et de l'eau, **caractérisée en ce que** le rapport pondéral de la somme de l'agent tensioactif et du sucre à l'eau s'élève à au moins 0,7 : 1 et le bâton de colle présente une teneur en eau de 25 à moins de 35 % en poids rapportés au poids total de la matière adhésive, un mélange d'au moins un dérivé d'alcool gras et d'au moins un sel d'un acide gras ou d'un dérivé d'acide gras étant présent à titre d'agents tensioactifs et le rapport du dérivé d'alcool gras au sel d'acide gras respectivement à son dérivé s'élevant de 4 : 1 à 1 : 4.

2. Matière adhésive selon la revendication 1, **caractérisée en ce que** la matière adhésive contient de 5 à 20 % en poids d'un ou de plusieurs alcools, en particulier d'alcools polyvalents.

3. Matière adhésive selon la revendication 1 ou 2, **caractérisée en ce que** le polymère est choisi parmi du polyuréthane, du polyacrylate, de la polyvinylpyrolidone, de l'amidon et ses dérivés, ainsi que leurs mélanges.

4. Matière adhésive selon l'une quelconque des revendications précédentes, **caractérisée en ce que** la matière adhésive contient de 8 à 40 % en poids de polymère.

5. Matière adhésive selon l'une quelconque des revendications précédentes, **caractérisée en ce que** la matière adhésive contient de 2,5 à 15 % en poids d'agent tensioactif.

6. Matière adhésive selon l'une quelconque des revendications précédentes, **caractérisée en ce que** la matière adhésive contient de 15 à 40 % en poids de sucre.

7. Matière adhésive selon l'une quelconque des revendications précédentes, **caractérisée en ce que** la matière adhésive comprend, à titre d'agent tensioactif, un dérivé d'alcool gras en C₁₂-C₁₈ et un sel d'acide gras en C₁₂-C₁₈ et/ou son dérivé, en particulier un dérivé d'alcool gras en C₁₂-C₁₄ et un sel d'acide gras en C₁₂-C₁₄ ou son dérivé.

8. Matière adhésive selon la revendication 7, **caractérisée en ce que** la matière adhésive présente une teneur maximale de 5 % en poids en dérivés d'alcools gras et en sels d'acides gras possédant une longueur de chaîne en C₁₆ ou plus, de préférence une teneur maximale de 3 % en poids.

9. Matière adhésive selon l'une quelconque des revendications précédentes, **caractérisée en ce que** la matière adhésive contient, à titre d'adjuvants supplémentaires, des plastifiants, des pigments, des colorants, des parfums, des conservateurs et/ou des substances régulant l'humidité, de même que, le cas échéant, d'autres polymères solubles dans l'eau et/ou aptes à être dispersés dans l'eau.

10. Bâton de colle contenant une matière adhésive selon l'une quelconque des revendications 1 à 9.

11. Utilisation d'une matière adhésive selon l'une quelconque des revendications 1 à 9, pour la liaison superficielle de substrats en particulier de papier, en particulier de papier photographique, de carton, de verre et/ou de matières synthétiques.
